(19)

(11) **EP 3 768 558 B1**

(12) **EUROPÄISCHE PATENTSCHRIFT**

(45) Veröffentlichungstag und Bekanntmachung des Hinweises auf die Patenterteilung:
**09.02.2022 Patentblatt 2022/06**

(21) Anmeldenummer: **19712919.0**

(22) Anmeldetag: **13.03.2019**

(51) Internationale Patentklassifikation (IPC):
***B60R 21/01*** *(2006.01)*

(52) Gemeinsame Patentklassifikation (CPC):
**B60R 21/01; B60W 50/0205;** B60R 2021/01027; B60R 2021/0119; B60W 2050/0215

(86) Internationale Anmeldenummer:
**PCT/EP2019/056235**

(87) Internationale Veröffentlichungsnummer:
**WO 2019/179840 (26.09.2019 Gazette 2019/39)**

(54) **SENSORANORDNUNG FÜR EIN FAHRZEUG UND VERFAHREN ZUR ÜBERWACHUNG EINES SENSORS**

SENSOR ARRANGEMENT FOR A VEHICLE AND METHOD FOR MONITORING A SENSOR

SYSTÈME DE CAPTEURS POUR UN VÉHICULE ET PROCÉDÉ DE CONTRÔLE D’UN CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.03.2018 DE 102018204286**

(43) Veröffentlichungstag der Anmeldung:
**27.01.2021 Patentblatt 2021/04**

(73) Patentinhaber: **Robert Bosch GmbH**
**70442 Stuttgart (DE)**

(72) Erfinder:
- **KOENIG, Simon**
  **74219 Moeckmuehl (DE)**
- **SCHMID, Michael**
  **70806 Kornwestheim (DE)**
- **JOHN, Dirk**
  **71691 Freiberg A.N. (DE)**
- **LANG, Gunther**
  **70563 Stuttgart (DE)**
- **KRIEG, Markus**
  **66503 Dellfeld (DE)**

(56) Entgegenhaltungen:
**WO-A1-00/41917**
**DE-A1-102016 105 016**
**US-A- 5 440 913**
**DE-A1-102012 222 690**
**JP-A- 2007 069 711**



Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung geht aus von einer Sensoranordnung für ein Fahrzeug nach der Gattung des unabhängigen Patentanspruchs 1. Gegenstand der vorliegenden Erfindung ist auch ein Verfahren zur Überwachung eines Sensors.

Die Detektion von Fahrzeugcrashs in Airbagsteuergeräten beruht in der Regel auf der Information von im Fahrzeug verbauten Sensoren, welche beispielsweise als Beschleunigungs- und/oder Drucksensoren ausgeführt sind. Die gemessenen Signale dieser Sensoren werden geeignet verarbeitet (z.B. gefiltert/integriert) und gegen Auslöseschwellen verglichen, um zu einer Auslöseentscheidung zu gelangen. Um eine Fehlauslösung durch einen defekten Sensor zu vermeiden, der im normalen Fahrbetrieb hohe Signalwerte ausgibt und die Auslöseschwellen überschreiten kann, kann ein Plausibilitätskonzept angewandt werden, welches verlangt, dass ein zweiter unabhängiger Sensor ebenfalls Signalwerte ausgibt, welche deutlich oberhalb von Signalwerten für eine normale Fahrsituationen zeigt. Nur wenn die Auslöseentscheidung des Hauptsensors zusammen mit der Plausibilitätsentscheidung des unabhängigen Sensors anliegt, wird eine Auslösung freigegeben. Ein solches Plausibilitätskonzept allein sichert allerdings nicht hinreichend gegen Fehlauslösungen ab. So können über die Fahrzeuglebenszeit Situationen wie Bordsteinüberfahrten mit hinreichend hohen Beschleunigungssignalen auftreten, in denen der Plausibilitätssensor zu einer Plausibilitätsentscheidung gelangt. Falls durch einen defekten Hauptsensor dauerhaft eine Auslöseentscheidung anliegen würde, wäre das Risiko einer Fehlauslösung daher viel zu hoch. Aus diesem Grund stellt das Plausibilitätskonzept lediglich die Zeit für die Sensorüberwachungen zur Verfügung, damit diese einen defekten Sensor erkennen können und dieser anschließend deaktiviert werden kann.

Aus dem Stand sind Verfahren zur Überwachung von Sensoren bekannt, welche die Sensorhardware selbst überwachen und typischerweise im Sensor selbst in der Initialisierungsphase nach Power-On ablaufen. Beispielsweise kann der Sensor gezielt ausgelenkt werden und dann geprüft werden, ob das Sensorsignal nach Wegfall der Auslenkung wieder sauber auf "Null" zurückgeht. Des Weiteren kann die Kommunikation zwischen Sensor und Airbagsteuergerät beispielsweise auf Manchesterfehler überwacht werden. Zudem können Überwachungen im Airbagsteuergerät durchgeführt werden, welche das ausgegebene Sensorsignal auf gewisse unplausible Eigenschaften prüfen. Dazu gehören beispielsweise Offsetüberwachungen und/oder Sprung- oder Gradientenüberwachungen. Ein fehlerhafter Offset ist beispielsweise durch eine hohe Signalamplitude gekennzeichnet, welche über eine lange Zeitspanne auftritt und einem unphysikalischen hohen Geschwindigkeitsabbau entspricht. Ein Sprung- oder Gradientenfehler ist beispielsweise dadurch gekennzeichnet, dass sich der Sensorwert von einem zum nächsten Messwert stärker ändert, als es die Filterkurve des Sensors erlaubt.

Offenbarung der Erfindung

Die Sensoranordnung für ein Fahrzeug mit den Merkmalen des unabhängigen Patentanspruchs 1 und das Verfahren zur Überwachung eines Sensors mit den Merkmalen des unabhängigen Patentanspruchs 11 haben den Vorteil, dass Sensorsignalfehler ab einer gewissen Stärke unabhängig von der genauen Signalform, wie beispielsweise Offset, Sprung, Einzelpeaks, beliebige Oszillationen, als defekt erkannt werden können. In vorteilhafter Weise spielt die genaue Form des Sensorfehlersignals ab einer gewissen Minimalstärke keine Rolle. Dadurch kann auch ein hypothetisches Sensorfehlersignal eines defekten Sensors, welches genau einem Crashsignal gleicht, durch einen Abgleich mit Sensorsignalen von anderen intakten Sensoren als Fehler erkannt werden.

Aus dem Stand der Technik bekannte Signalüberwachungen fokussieren sich auf wenige Spezialfälle eines offensichtlich defekten Sensorsignals (Offset, Sprünge, etc.). In der Praxis zeigt sich jedoch, dass die Sensorfehlerbilder so vielfältig sind, dass sich nur ein Bruchteil davon mit diesen Überwachungen erkennen lässt. Je nach Ursprung des Sensordefekts weisen Sensorfehlersignale auch große Ähnlichkeiten mit Crashsignalen auf und lassen sich grundsätzlich nicht von Crashsignalen unterscheiden. Der Kern der Erfindung besteht darin, ein defektes Sensorsignal nicht durch Analyse dieses einen Sensorsignals selbst zu erkennen. Stattdessen soll ausgenutzt werden, dass im Fahrzeug stets mehrere Sensoren verbaut sind, alleine schon, um das im Stand der Technik beschriebene Plausibilitätskonzept umzusetzen. Falls ein intakter Sensor ein hohes Beschleunigungs- oder Drucksignal misst, das seinen Ursprung in einem Crash oder einem extremen Fahrmanöver wie einer Bordsteinüberfahrt hat, so werden auch andere Sensoren im Fahrzeug dieses Ereignis messen, so dass kein Sensorfehler vorliegt. Falls das hohe Sensorsignal seinen Ursprung in einem Sensorfehler hat, messen die anderen Sensoren dagegen nur schwache Signale im Bereich normaler Fahrsituationen, so dass auf einen Sensorfehler geschlossen werden kann. Bei Beschleunigungssensoren liegen die Signalwerte während des normalen Fahrbetriebs beispielsweise in einer Größenordnung von 1g.

Ausführungsformen der Erfindung reduzieren in vorteilhafter Weise das Risiko einer Fehlauslösung durch das Zusammentreffen eines noch unentdeckten Sensorfehlers mit einer von einem starken Fahrmanöver hervorgerufenen Plausibilitätsentscheidung.

Ausführungsformen der vorliegenden Erfindung stellen eine Sensoranordnung für ein Fahrzeug, mit einem ersten Sensor, welcher mindestens eine crashrelevante physikalische Größe erfasst und mindestens ein korrespondierendes erstes Sensorsignal ausgibt, und mit mindestens einem zweiten Sensor, welcher unabhängig vom ersten Sensor mindestens eine crashrelevante physikalische Größe erfasst und mindestens ein korrespondierendes zweites Sensorsignal ausgibt, und mit einer Auswerte- und Steuereinheit zur Verfügung, welche das mindestens eine erste Sensorsignal und das mindestens eine zweite Sensorsignal empfängt und zur Crasherkennung auswertet. Hierbei verwendet die Auswerte- und Steuereinheit mindestens ein zweites Vergleichssignal, welches auf dem mindestens einen zweiten Sensorsignal des mindestens einen zweiten Sensors basiert, um den ersten Sensor zu überwachen, wobei die Auswerte- und Steuereinheit erkennt, dass der erste Sensor defekt ist, wenn mindestens ein erstes Vergleichssignal, welches auf dem ersten Sensorsignal basiert, einen hohen Signalwert aufweist, welcher oberhalb eines vorgegebenen ersten Schwellwerts liegt, und das zur Überwachung des ersten Sensors herangezogene mindestens eine zweite Vergleichssignal des zweiten Sensors gleichzeitig einen niedrigen Signalwert aufweist, welcher unterhalb eines vorgegebenen zweiten Schwellwerts liegt, und/oder eine aus dem ersten Vergleichssignal und dem zweiten Vergleichssignal erzeugte Abweichungsfunktion über einem vorgegebenen dritten Schwellwert liegt.

Zudem wird ein Verfahren zur Überwachung eines Sensors vorgeschlagen, welcher mindestens eine crashrelevante physikalische Größe erfasst und mindestens ein korrespondierendes erstes Sensorsignal ausgibt, wobei das mindestens eine erste Sensorsignal zur Crasherkennung ausgewertet wird. Hierbei wird mindestens ein zur Crasherkennung erfasstes zweites Sensorsignal mindestens eines unabhängigen weiteren Sensors ausgewertet, um einen Defekt des Sensors zu erkennen, wobei ein Defekt des Sensors erkannt wird, wenn mindestens ein erstes Vergleichssignal, welches auf dem ersten Sensorsignal basiert, einen hohen Signalwert aufweist, welcher oberhalb eines vorgegebenen ersten Schwellwerts liegt, und mindestens ein zur Überwachung des Sensors herangezogenes zweites Vergleichssignal, welche auf dem mindestens einen zweiten Sensorsignal des weiteren Sensors basiert, gleichzeitig einen niedrigen Signalwert aufweist, welcher unterhalb eines vorgegebenen zweiten Schwellwerts liegt, und/oder eine aus dem ersten Vergleichssignal und dem zweiten Vergleichssignal erzeugte Abweichungsfunktion über einem vorgegebenen dritten Schwellwert liegt.

Das mindestens eine erste Vergleichssignal kann beispielsweise dem mindestens einen ersten Sensorsignal und/oder mindestens einem verarbeiteten ersten Sensorsignal entsprechen. Das mindestens eine zweite Vergleichssignal kann beispielsweise dem mindestens einen zweiten Sensorsignal und/oder mindestens einem verarbeiteten zweiten Sensorsignal entsprechen.

Unter der Auswerte- und Steuereinheit wird vorliegend ein elektrisches Gerät, wie beispielsweise ein Steuergerät, insbesondere ein Airbagsteuergerät, verstanden, welches von Sensoren erfasste Sensorsignale verarbeitet bzw. auswertet. Die Auswerte- und Steuereinheit kann mindestens eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Auswerte- und Steuereinheit beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung der Auswertung verwendet wird, wenn das Programm von der Auswerte- und Steuereinheit ausgeführt wird.

Unter einem Sensor wird vorliegend eine Baugruppe verstanden, welche mindestens ein Sensorelement umfasst, welches eine physikalische Größe bzw. eine Änderung einer physikalischen Größe direkt oder indirekt erfasst und vorzugsweise in ein elektrisches Sensorsignal umwandelt. Der Sensor kann beispielsweise druckempfindliche Sensorelemente, welche einen Aufprallbereich am Fahrzeug ermitteln, und/oder Beschleunigungssensorelemente, welche beschleunigungsrelevante Informationen des Fahrzeugs erfassen, und/oder Sensorelemente umfassen, welche Gegenstände und/oder Hindernisse und/oder andere crashrelevante Fahrzeugumfelddaten ermitteln und zur Auswertung zur Verfügung stellen. Solche Sensorelemente können beispielsweise auf Video- und/oder Radar- und/oder Lidar und/oder PMD- und/oder Ultraschall-Technologien basieren. Zudem können auch Signale und Informationen einer vorhandenen ABS-Sensorik und die im dafür vorgesehenen Steuergerät abgeleiteten Größen ausgewertet werden.

Durch die in den abhängigen Ansprüchen aufgeführten Maßnahmen und Weiterbildungen sind vorteilhafte Verbesserungen der im unabhängigen Patentanspruch 1 angegebenen Sensoranordnung für ein Fahrzeug und des im unabhängigen Patentanspruch 11 angegebenen Verfahrens zur Überwachung eines Sensors möglich.

Besonders vorteilhaft ist, dass die Auswerte- und Steuereinheit jeweils eine Absolutbetragsfunktion der Sensorsignale berechnen kann, wobei die Auswerte- und Steuereinheit zur Verarbeitung der Sensorsignale oder der berechneten Absolutbetragsfunktionen eine Filterung und/oder Fensterintegralbildung und/oder eine Integralbildung durchführen kann. Für die Signalverarbeitung gibt es unzählige Möglichkeiten. In der Regel wird man für das erste Sensorsignale eine gewisse Filterung heranziehen, da man nicht auf einem einzigen hohen Sensorwert einen Fehler qualifizieren möchte. Dazu kann das erste Sensorsignal oder der Absolutbetrag des Sensorsignals gefiltert, fensterintegriert oder integriert werden. Hierbei hat der Absolutbetrag den Vorteil, dass auch stark oszillierende Fehlersignale zu hohen verarbeiteten ersten Sensorsignalen führen. Die Integration kann gestartet werden, wenn das erste Sensorsignal eine Startschwelle überschreitet. Der aufintegrierte Wert kann zurückgeführt oder zurückgesetzt werden, wenn das erste Sensorsignal eine Rücksetzschwelle, die mit der Startschwelle identisch sein kann, wieder unterschreitet.

In vorteilhafter Ausgestaltung der Sensoranordnung kann der erste Schwellwert einen Signalwert repräsentieren, welcher signifikant oberhalb von Signalwerten für eine normale Fahrsituation liegt. Zudem kann der zweite Schwellwert einen Bereich von Signalwerten für eine normale Fahrsituation nach oben begrenzen. Somit kann ein auslösekritischer Sensorfehler des zu überwachenden ersten Sensors daran erkannt werden, dass der zu überwachende Sensor hohe Signalwerte misst, welche signifikant oberhalb normaler Fahrsituationen liegen, während gleichzeitig die zur Überwachung herangezogenen zweiten Sensoren niedrige Signalwerte im Bereich normaler Fahrsituationen messen.

In weiterer vorteilhafter Ausgestaltung der Sensoranordnung kann der erste Sensor und der mindestens eine zweite Sensor die gleiche physikalische Größe erfassen. Alternativ können der erste Sensor und der mindestens eine zweite Sensor verschiedene physikalischen Größen erfassen. Des Weiteren können der erste Sensor und der mindestens eine zweite Sensor die gleiche Erfassungsrichtung oder verschiedene Erfassungsrichtungen aufweisen. Zudem können der erste Sensor und der mindestens eine zweite Sensor am gleichen Einbauort oder an verschiedenen Einbauorten angeordnet werden. Dadurch können in vorteilhafter Weise je nach der im Fahrzeug verfügbaren Sensorkonfiguration unterschiedliche Konzepte in unterschiedlichen Ausbaustufen zur Erkennung eines defekten Sensors eingesetzt werden.

In weiterer vorteilhafter Ausgestaltung der Sensoranordnung kann die Auswerte- und Steuereinheit einen als defekt erkannten ersten Sensor deaktivieren. Damit wird das Risiko einer Fehlauslösung durch das Zusammentreffen eines noch unentdeckten Sensorfehlers mit einer von einem starken Fahrmanöver hervorgerufenen Plausibilitätsentscheidung deutlich verringert.

In vorteilhafter Ausgestaltung des Verfahrens zur Überwachung eines Sensors können das erste Sensorsignal und/oder das verarbeitete erste Sensorsignal zur Defekterkennung für eine vorgegebene Mindestzeitspanne über dem ersten Schwellwert liegen, während das zweite Sensorsignal und/oder das verarbeitete zweite Sensorsignal für einen vorgegebenen Zeitbereich, welcher die Mindestzeitspanne für das erste Sensorsignal und/oder das verarbeitete erste Sensorsignal überlappt, unterhalb des zweiten Schwellwerts liegen. Das bedeutet, dass das erste Sensorsignal und/oder das verarbeitete erste Sensorsignal als möglicher Weise defekt erkannt werden können, wenn diese für eine vorgegebene Mindestzeitspanne über dem ersten Schwellwert liegen. Dadurch kann verhindert werden, dass einmalige und kurzzeitige Fehlmessungen zu einer Deaktivierung des Sensors führen.

Ein Ausführungsbeispiel der Erfindung ist in der Zeichnung dargestellt und wird in der nachfolgenden Beschreibung näher erläutert.

Kurze Beschreibung der Zeichnungen

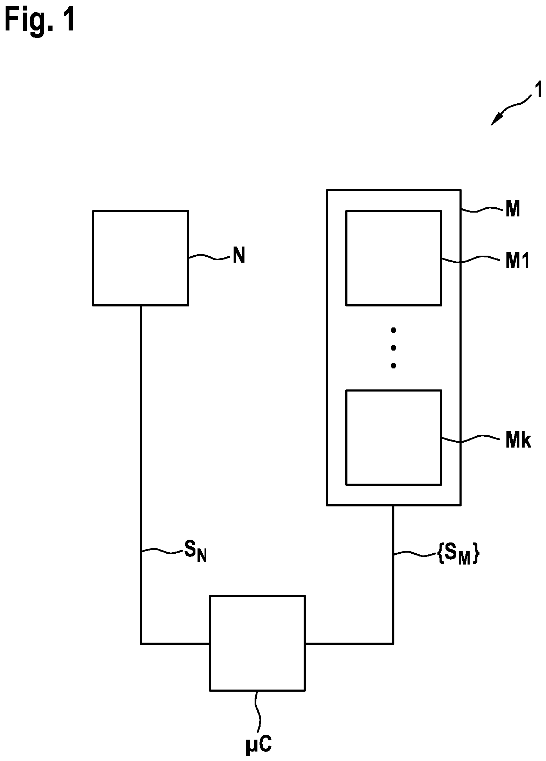

Fig. 1 zeigt ein schematisches Blockdiagramm eines Ausführungsbeispiels einer erfindungsgemäßen Sensoranordnung für ein Fahrzeug.

Ausführungsformen der Erfindung

Wie aus Fig. 1 ersichtlich ist, umfasst das dargestellte Ausführungsbeispiel einer erfindungsgemäßen Sensoranordnung 1 für ein Fahrzeug 1 einen ersten Sensor N, welcher mindestens eine crashrelevante physikalische Größe erfasst und mindestens ein korrespondierendes erstes Sensorsignal $S_N$ ausgibt, mindestens einen zweiten Sensor M, welcher unabhängig vom ersten Sensor N mindestens eine crashrelevante physikalische Größe erfasst und mindestens ein korrespondierendes zweites Sensorsignal $S_M$ ausgibt, und eine Auswerte- und Steuereinheit $\mu C$, welche das mindestens eine erste Sensorsignal $S_N$ und das mindestens eine zweite Sensorsignal $S_M$ empfängt und zur Crasherkennung auswertet. Hierbei verwendet die Auswerte- und Steuereinheit $\mu C$ mindestens ein zweites Vergleichssignal, welches auf dem mindestens einen zweiten Sensorsignal $S_M$ des mindestens einen zweiten Sensors M basiert, um den ersten Sensor N zu überwachen. Die Auswerte- und Steuereinheit $\mu C$ erkennt, dass der erste Sensor N defekt ist, wenn mindestens ein erstes Vergleichssignal, welches auf dem mindestens einen ersten Sensorsignal $S_N$ basiert, einen hohen Signalwert aufweist, welcher oberhalb eines vorgegebenen ersten Schwellwerts Thd_det liegt, und das zur Überwachung des ersten Sensors N herangezogene mindestens eine zweite Vergleichssignal, welches auf dem mindestens einen zweiten Sensorsignal $S_M$ des zweiten Sensors M gleichzeitig einen niedrigen Signalwert aufweist, welcher unterhalb eines vorgegebenen zweiten Schwellwerts Thd_drive liegt. Zusätzlich oder alternativ erkennt die Auswerte- und Steuereinheit $\mu C$, dass der erste Sensor N defekt ist, wenn eine aus dem ersten Vergleichssignal und dem zweiten Vergleichssignal erzeugte Abweichungsfunktion $f(S_N,\{S_M\})$ über einem vorgegebenen dritten Schwellwert Thd liegt.

Das mindestens eine erste Vergleichssignal kann dem mindestens einen ersten Sensorsignal $S_N$ und/oder mindestens einem verarbeiteten ersten Sensorsignal $(g(S_N))$ entsprechen. Das mindestens eine zweite Vergleichssignal kann dem mindestens einen zweiten Sensorsignal $S_M$ und/oder mindestens einem verarbeiteten zweiten Sensorsignal $h_M(S_M)$ entsprechen.

Somit kann ein auslösekritischer Sensorfehler des ersten Sensors N daran erkannt werden, dass der zu überwachende erste Sensor N hohe Signalwerte $S_N$ signifikant oberhalb normaler Fahrsituationen misst, und die zur Überwachung herangezogenen Sensoren {M} (M≠N) gleichzeitig niedrige Signalwerte $S_M$ im Bereich normaler Fahrsituationen aufweisen. Somit kann ein Sensorfehler des ersten Sensors N unter Verwendung der Sensorsignale $\{S_M\}$ also erkannt werden, wenn eine die jeweiligen Sensorsignale bewertende Abweichungsfunktion $f(S_N,\{S_M\})$ über einem dritten Schwellwert Thd liegt, wie aus Ungleichung (1) ersichtlich ist.

$$f(S_N,\{S_M\}) > Thd \qquad (1)$$

Die Auswerte- und Steuereinheit µC deaktiviert einen als defekt erkannten ersten Sensor N.

Je nach der im Fahrzeug verfügbaren Sensorkonfiguration kann das Konzept in unterschiedlichen Ausbaustufen eingesetzt werden.

Bei einem lokalisierten Monitoring befinden sich in einem Fahrzeug neben dem zu überwachenden ersten Sensor N noch weitere Sensoren {M} am gleichen Einbauort. Dies ist beispielsweise im Airbagsteuergerät gegeben, in welchem in der Regel mehrere Beschleunigungssensoren, welche beispielsweise in longitudinaler und lateraler Richtung messen, und optional Drehratensensoren verfügbar sind, welche beispielsweise eine Drehrate um die Längsachse oder Hochachse messen. Bei einem real während eines Crashs oder bei einem starken Misuseevent, wie einer Bordsteinüberfahrt gemessenen signifikanten ersten Sensorsignals $S_N$ des zu überwachenden ersten Sensors N, werden stets auch zweite Sensorsignale $S_M$ durch die weiteren Sensoren {M} gemessen. Dies gilt häufig auch dann, wenn diese eine andere physikalische Größe messen. So kann beispielsweise der erste Sensor N eine longitudinale Beschleunigung messen, und der mindestens eine zweite Sensor M kann eine laterale Beschleunigung oder eine Drehrate um die Längsachse messen. Vorteilhaft ist aber natürlich eine bestmögliche Übereinstimmung zwischen den gemessenen physikalischen Größen. Im Idealzustand ist im Airbagsteuergerät die Sensorik zur Realisierung des im Stand der Technik beschriebenen Plausibilitätskonzeptes redundant ausgeführt, so dass neben dem Hauptsensor bzw. dem ersten Sensor N noch ein zweiter Beschleunigungssensor bzw. ein zweiter Sensor M mit gleicher Messrichtung und sehr ähnlichen Sensoreigenschaften wie Messbereich, Auflösung, Filterverhalten vorliegt.

Bei einem ersten Ausführungsbeispiel ist der mindestens eine zweite Sensor M nicht direkt mit dem ersten Sensor N vergleichbar, beispielsweise aufgrund einer anderen Erfassungsrichtung oder aufgrund anderer Sensoreigenschaften, dann kann keine eigentliche Signalabweichung der beiden Sensorsignale $S_N$, $S_M$ bewertet werden. Wie aus Fig. 1 weiter ersichtlich ist, wird der mindestens eine Sensor M durch eine Menge an zweiten Sensoren {M} repräsentiert, welche k zweite Sensoren M1, ... , Mk umfasst. Es ist aber auch möglich, lediglich einen zweiten Sensor M zu verwenden.

Ausführungsformen der Sensoranordnung 1 für ein Fahrzeug erkennen einen Sensorfehler durch hohe Signalwerte am ersten Sensor N und geringe Signalwerte an den zweiten Sensoren {M}. Besonders vorteilhaft werden für diesen Vergleich nicht die rohen Sensorsignale $S_N$ und $\{S_M\}$, sondern geeignet verarbeitete Sensorsignale $g(S_N)$ und $\{h_M(S_M)\}$ verwendet. Hierbei bezeichnet g die Signalverarbeitungsfunktion des ersten Sensorsignals N und $h_M$ die Signalverarbeitungsfunktion des mindestens einen zweiten Sensors M, welche im Allgemeinen für jeden zweiten Sensor M unterschiedlich ausfallen können. Bei gleichartigen Sensoren M können aber auch identische Signalverarbeitungsfunktionen $h_M(S_M) = h(S_M)$ angesetzt werden.

Bei dem ersten Ausführungsbeispiel wird ein auslösekritischer Sensorfehler des ersten Sensors N erkannt, wenn das verarbeitete erste Signal $g(S_N)$ den vorgegebenen ersten Schwellwert Thd_det überschreitet und die verarbeiteten zweiten Sensorsignale $\{h_M(S_M)\}$ unterhalb des zweiten Schwellwerts Thd_drive liegen. In dieser Variante muss das verarbeitete Sensorsignale $\{h_M(S_M)\}$ jedes Sensors M unter einem entsprechenden sensorspezifischen zweiten Schwellwert liegen. In einer vereinfachten Implementierung kann aber der Satz an verarbeiteten Signalen $\{h_M(S_M)\}$ auch zu einem einzigen verarbeiteten Signal $H(\{S_M\})$ kombiniert werden, beispielsweise durch Auswahl eines Maximums. Dann vereinfacht sich die Abfrage auf zwei Schwellwertvergleiche. Bei dem ersten Ausführungsbeispiel entspricht eine erste Abweichungsfunktion $f(S_N,\{S_M\})$, welche die Auswerte- und Steuereinheit µC verwendet, um das mindestens eine erste Sensorsignal $S_N$ und das mindestens eine zweite Sensorsignal $S_M$ oder das mindestens eine verarbeitete erste Sensorsignal $g(S_N)$ und das mindestens eine verarbeitete zweite Sensorsignal $h_M(S_M)$ zu bewerten, einer Booleschen Funktion. Gleichung (1) wird dann zu Gleichung (2).

$$f(S_N,\{S_M\}) = [g(S_N) > Thd_Det] \ \& \ [H(\{S_M\}) < Thd_drive] \qquad (2)$$

Hierbei lautet die allgemeine Bedingung zur Fehlererkennung $f(S_N,\{S_M\}) > 0$.

Für die Signalverarbeitungsfunktionen g und h gibt es unzählige Möglichkeiten. In der Regel wird man für das erste verarbeitete Sensorsignal $g(S_N)$ eine gewisse Filterung heranziehen, da man nicht basierend auf einem einzigen hohen Sensorwert einen Fehler qualifizieren möchte. Dazu kann das Sensorsignal $S_N$ oder der Absolutbetrag des Sensorsignals $|S_N|$ gefiltert, fensterintegriert oder integriert werden. Hierbei weist der Absolutbetrag den Vorteil auf, dass auch stark oszillierende Fehlersignale zu hohen verarbeiteten ersten Sensorsignalen $g(S_N)$ führen. Die Integration kann gestartet werden, wenn das Sensorsignal $S_N$ eine Startschwelle Thd_start überschreitet. Der aufintegrierte Wert kann dann zurückgeführt oder zurückgesetzt werden, wenn das Sensorsignal $S_N$ eine Rücksetzschwelle Thd_reset, welche mit der Startschwelle Thd_start identisch sein kann, wieder unterschreitet.

Prinzipiell können die Funktionen $h_M$ ähnlich angesetzt werden. Typischerweise wird man hier aber nur eine schwache oder gar keine Filterung vornehmen, da ein hinreichend hoher Signalwert an einem der zweiten Sensoren {M} schon ein Indiz dafür ist, dass es sich um eine reale Fahrsituation handelt. Dies gilt umso mehr, wenn die zweiten Sensoren {M} nicht dieselbe physikalische Größe wie der zu überwachende erste Sensor N messen.

Für die Signalverarbeitungsfunktionen g und h sowie für die Schwellwerte Thd_det und Thd_drive können auch bereits existierende Algorithmusmerkmale und Schwellwerte der Auswerte- und Steuereinheit $\mu$C mitbenutzt werden.

Bei einem zweiten Ausführungsbeispiel liegt eine redundante Sensorik vor, das bedeutet, dass die Sensoren N, M die gleiche physikalische Größe, wie beispielsweise eine longitudinale Beschleunigung messen. Eine reale Fahrsituation oder ein Crash sollte hier zu einem im Rahmen der Toleranzen vergleichbaren physikalischen Messwert der Sensoren N, M führen, d.h. es kann direkt die Abweichung zwischen den Sensoren N, M bewertet werden. In der Regel wird hier nur ein zweiter Sensor M vorliegen, der redundant zum ersten Sensor N ist. Eine ähnliche Situation liegt auch bei einem Druckschlauchsensor vor, welcher für die Detektion eines Fußgängeraufpralls verwendet werden kann. Hier ist im Fahrzeugfrontend ein Druckschlauch integriert, welcher auf beiden Seiten von einem Drucksensor abgeschlossen wird. Ein Aufprall deformiert den Schlauch und führt an beiden Drucksensoren zu einem Druckanstieg. Je nach Aufprallort unterscheiden sich die Drucksignale an beiden Sensoren etwas voneinander (z.B. durch Laufzeiteffekte), sind aber doch stets von einer ähnlichen Größenordnung.

Da bei dem zweiten Ausführungsbeispiel die Sensorsignale $S_N$, $S_M$ direkt miteinander verglichen werden, ist es vorteilhaft, eventuelle geringe Unterschiede in Messbereich oder Filterverhalten oder den Einfluss von Sensorrauschen durch eine geeignete Vorverarbeitung, z.B. einer Signalbegrenzung oder schwachen Vorfilterung zu minimieren.

Anschließend kann direkt ein Abweichungsmaß $k(S_N - S_M)$ berechnet werden. Wiederum wird ein Fehler bzw. Defekt des ersten Sensors N nur erkannt, wenn eine signifikante Abweichung, ggfs. über einen längeren Zeitraum, anliegt. Dazu bietet es sich an, den Signalunterschied $S_N - S_M$ zwischen dem ersten Sensorsignal $S_N$ und dem zweiten Sensorsignal $S_M$ oder den Absolutwert des Signalunterschieds $|S_N - S_M|$ zwischen dem ersten Sensorsignal $S_N$ und dem zweiten Sensorsignal $S_M$ zu filtern, zu fensterintegrieren oder zu integrieren. Um nicht kleinere Signalunterschiede über längere Zeit zu einem kritischen Gesamtwert aufzusummieren, bietet es sich an, die Integration erst zu starten, wenn der betragsmäßige Signalunterschied $|S_N - S_M|$ die Startschwelle Thd_start überschreitet. Der aufintegrierte Wert kann zurückgeführt oder zurückgesetzt werden, wenn die Resetschwelle Thd_reset, welche mit der Startschwelle identisch sein kann, wieder unterschritten wird. Will man die Berechnung des Abweichungsmaßes k auf "Normalfahrtsituationen" beschränken und denkbare größere Abweichungen in einem Crash ausschließen, kann als Startbedingung für die Filterung bzw. Aufsummierung des Differenzsignals auch eine Bedingung gemäß Ungleichung (3)

$$|S_N| > Thd1 \ \& \ |S_M| < Thd2 \qquad (3)$$

verwendet werden, wobei die Schwellwerte Thd1 und Thd2 oberhalb von während einer Normalfahrt erreichbaren Werten des ersten Sensorsignals $S_N$ und des zweiten Sensorsignals $S_M$ liegen und ein erster Schwellwert Thd1 deutlich oberhalb des zweiten Schwellwertes Thd2 liegt, um eine hinreichende Abweichung sicherzustellen. Dann wird nur aufsummiert, wenn der Überwachungssensor bzw. der zweite Sensor M einen Wert im Rahmen einer Normalfahrt misst und der zu überwachende Sensor bzw. der erste Sensor N durch einen Sensorfehler Werte außerhalb einer Normalfahrt sieht. Der aufsummierte Wert kann dann zurückgeführt oder zurückgesetzt werden, sobald eine der beiden Bedingungen nicht mehr gegeben ist. Besonders vorteilhaft ist es auch, die gefilterte oder integrierte Signaldifferenz nicht absolut, sondern relativ auszuwerten, z.B. in Bezug auf ein ähnlich gefiltertes oder integriertes erstes Sensorsignal $S_N$.

Ein so berechnetes Abweichungsmaß $k(S_N - S_M)$ kann nun durch einen Schwellwertvergleich direkt zur Fehlerqualifikation verwendet werden. In diesem Fall wird Gleichung (1) zu Gleichung (4).

$$f(S_N,\{S_M\}) = k(S_N - S_M) > Thd \qquad (4).$$

Besonders vorteilhaft können auch die Konzepte der beiden Ausführungsbeispiele miteinander kombiniert werden. Dann wird ein Sensorfehler durch die UND-Kombination von drei Kriterien erkannt. Ein hohes (verarbeitetes) erstes Sensorsignal $S_N$ des ersten Sensors N (g(SN) > Thd_det). Ein geringes (verarbeitetes) zweites Sensorsignal $S_M$ des zweiten Sensors M ($h(S_M)$ < Thd_drive) und eine große Signalabweichung zwischen den Sensoren N und M ($k(S_N - S_M)$ > Thd).

In diesem Fall wird Gleichung (1) zu Gleichung (5) und die Abweichungsfunktion durch eine Boolesche Funktion mit Schwellwert Null beschrieben.

$$f(S_N,\{S_M\}) = [g(S_N) > Thd_Det] \,\&\, [h(S_M) < Thd_drive] \,\&\, [k(S_N - S_M) > Thd] > 0 \quad (5).$$

Bei einem delokalisierten Monitoring befinden sich am Einbauort des zu überwachenden ersten Sensors N keine weiteren zweiten Sensoren M. Diese zweiten Sensoren M sind stattdessen an anderen Orten im Fahrzeug verbaut. Eine solche Situation gilt beispielsweise für periphere Beschleunigungs- oder Drucksensoren.

In diesem Fall können bei einem Crash oder einem Misuseevent starke Unterschiede zwischen den verschiedenen räumlich getrennten Sensorsignalen $S_N$, $S_M$ auftreten, sowohl in Amplitude als auch im zeitlichen Verhalten, die einen direkten Vergleich unmöglich machen. Es gilt aber dennoch, dass nach Ende eines Events (Crash wie Misuseevent) jeder Fahrzeugort und damit Sensoreinbauort dieselbe Geschwindigkeitsänderung erfahren hat. In der Praxis treten gewisse Abweichungen insbesondere bei Sensoren in der Intrusionszone auf, die auf Clippingeffekte im Sensor oder auf das Verdrehen des Sensors aus seiner ursprünglichen Messrichtung zurückzuführen sind. Dennoch gilt, dass im Rahmen gewisser Toleranzen alle Sensoren einen ähnlichen Geschwindigkeitsabbau sehen. Integriert man also das Signal von Beschleunigungssensoren mit gleicher Messrichtung über den Event auf, so ergeben sich auf eventüblichen Zeitskalen vergleichbare Werte. Bei Crashs wird dieser Geschwindigkeitsabbau von Sensoren innerhalb bzw. nahe der Intrusionszone aber schneller erfasst als von Sensoren außerhalb der Intrusionszone. Bei einem Misuseevent, wie einem lokalen Hammerschlag, wird ein nahegelegener Sensor kurzfristig signifikante Geschwindigkeitsänderungen messen, die aber rasch wieder abklingen.

Treten also lediglich am ersten Sensor N hohe Werte des Geschwindigkeitsabbaus für eine gewisse Zeitspanne auf, wohingegen andere Sensoren M in einem ähnlichen Zeitbereich keinen nennenswerten Geschwindigkeitsabbau erfassen, deutet dies auf einen Sensorfehler des ersten Sensors N hin. In der Umsetzung kann anstelle des Geschwindigkeitsabbaus am Einbauort des ersten Sensors N auch ein anderes hinreichend gefiltertes "makroskopisches" erstes Signal $g(S_N)$ verwendet werden, wobei die Zeitskalen der Filterung oder Integration hier vorzugsweise lange genug gewählt werden, um den ganzen Event zu erfassen. Analog können die Geschwindigkeitsabbauten an den Einbauorten der zweiten Sensoren {M} auch durch auf andere Art verarbeitete zweite Sensorsignale $\{h_M(S_M)\}$ beschrieben werden. Hier mag es sogar vorteilhaft sein, nur schwach oder gar nicht zu filtern, da ein hoher Signalwert am zweiten Sensor M schon ein Indiz für das Vorliegen eines realen Events darstellt. Dies gilt insbesondere dann, wenn die zweiten Sensoren M nicht dieselbe Erfassungsrichtung wie der erste Sensor N aufweisen oder eine andere physikalische Größe messen.

Das allgemeine Erkennungskonzept für Sensorfehler des ersten Sensor N lautet dann, dass das verarbeitete erste Sensorsignal $g(S_N)$ für eine vorgegebenen Mindestzeitspanne [t; t+Tmin] über dem ersten Schwellwert Thd_det liegt, und das verarbeitete zweite Sensorsignal $h_M(S_M)$ in einem vorgegebenen Zeitbereich [t-T1; t+T2], welcher die Mindestzeitspanne [t; t+Tmin] einschließt, unter dem zweiten Schwellwert Thd_drive liegt. Die optionale Mindestzeitspanne Tmin kann eine kurzzeitige Schwellwertüberschreitung des ersten Schwellwerts Thd_det durch das erste Sensorsignal $g(S_N)$ in einem lokalen Misuseevent, wie einem Hammerschlag, ausblenden. Dies kann alternativ auch durch eine genügend hohe Wahl des ersten Schwellenwerts Thd_det sichergestellt werden. Die beiden optionalen Zeitspannen T1 und T2 tragen dem unterschiedlichen Zeitverhalten an verschiedenen Messorten Rechnung. Das bedeutet, dass Sensorfehler oder Defekt des ersten Sensors N dann vorliegt und erkannt wird, wenn das verarbeitete Sensorsignal $g(S_N)$ des ersten Sensors N für eine hinreichend lange Zeit über dem ersten Schwellwert Thd_det liegt, und die anderen Sensoren M im Fahrzeug in einer gewissen Zeitspanne vor und nach dieser Schwellwertüberschreitung des ersten Sensors N keine nennenswerten Signale, d.h. lediglich Signale im Normalfahrtbereich messen.

Ausführungsformen des erfindungsgemäßen Verfahren zur Überwachung eines Sensors N, welcher mindestens eine crashrelevante physikalische Größe erfasst und mindestens ein korrespondierendes erstes Sensorsignal $S_N$ ausgibt, wobei das mindestens eine erste Sensorsignal $S_N$ zur Crasherkennung ausgewertet wird, werten mindestens ein zweites zur Crasherkennung erfasstes Sensorsignal $S_M$ mindestens eines unabhängigen weiteren Sensors M aus, um einen Defekt des Sensors N zu erkennen. Hierbei wird ein Defekt des Sensors N erkannt, wenn mindestens ein erstes Vergleichssignal, welches auf dem ersten Sensorsignal $S_N$ basiert, einen hohen Signalwert aufweist, welcher oberhalb eines vorgegebenen ersten Schwellwerts Thd_det liegt, und mindestens ein zur Überwachung des Sensors N herangezogenes zweites Vergleichssignal, welches auf dem mindestens einen zweiten Sensorsignal $S_M$ des weiteren Sensors M basiert, gleichzeitig einen niedrigen Signalwert aufweist, welcher unterhalb eines vorgegebenen zweiten Schwellwerts Thd_drive liegt. Zusätzlich oder alternativ wird ein Defekt des Sensors N erkannt, wenn eine aus dem ersten Vergleichssignal und dem zweiten Vergleichssignal erzeugte Abweichungsfunktion $f(S_N,\{S_M\})$ über einem vorgegebenen dritten Schwellwert Thd liegt.

Wie oben bereits ausgeführt ist, kann das mindestens eine erste Vergleichssignal dem mindestens einen ersten Sensorsignal $S_N$ und/oder mindestens einem verarbeiteten ersten Sensorsignal $(g(S_N))$ entsprechen, und das mindestens eine zweite Vergleichssignal kann dem mindestens einen zweiten Sensorsignal $S_M$ und/oder mindestens einem verarbeiteten zweiten Sensorsignal $h_M(S_M)$ entsprechen.

Hierbei repräsentiert der erste Schwellwert Thd_det einen Signalwert, welcher signifikant oberhalb von Signalwerten für eine normale Fahrsituation liegt. Der zweite Schwellwert Thd_drive begrenzt einen Bereich von Signalwerten für eine normale Fahrsituation nach oben.

Ausführungsformen der vorliegenden Erfindung erkennen einen defekten Sensor als defekt und deaktivieren den als defekt erkannten Sensor, wenn ein zweiter Sensor die Signale des ersten Sensors nicht bestätigt.

**Patentansprüche**

1. Sensoranordnung (1) für ein Fahrzeug, mit einem ersten Sensor (N), welcher mindestens eine crashrelevante physikalische Größe erfasst und mindestens ein korrespondierendes erstes Sensorsignal ($S_N$) ausgibt, und mit mindestens einem zweiten Sensor (M), welcher unabhängig vom ersten Sensor (N) mindestens eine crashrelevante physikalische Größe erfasst und mindestens ein korrespondierendes zweites Sensorsignal ($S_M$) ausgibt, und mit einer Auswerte- und Steuereinheit ($\mu$C), welche das mindestens eine erste Sensorsignal ($S_N$) und das mindestens eine zweite Sensorsignal ($S_M$) empfängt und zur Crasherkennung auswertet, **dadurch gekennzeichnet, dass** die Auswerte- und Steuereinheit ($\mu$C) mindestens ein zweites Vergleichssignal, welches auf dem mindestens einen zweiten Sensorsignal ($S_M$) des mindestens einen zweiten Sensors (M) basiert, verwendet, um den ersten Sensor (N) zu überwachen, wobei die Auswerte- und Steuereinheit ($\mu$C) erkennt, dass der erste Sensor (N) defekt ist, wenn mindestens ein erstes Vergleichssignal, welches auf dem mindestens einen ersten Sensorsignal ($S_N$) basiert, einen hohen Signalwert aufweist, welcher oberhalb eines vorgegebenen ersten Schwellwerts (Thd_det) liegt, und das zur Überwachung des ersten Sensors (N) herangezogene mindestens eine zweite Vergleichssignal des zweiten Sensors (M) gleichzeitig einen niedrigen Signalwert aufweist, welcher unterhalb eines vorgegebenen zweiten Schwellwerts (Thd_drive) liegt, und/oder eine aus dem ersten Vergleichssignal und dem zweiten Vergleichssignal erzeugte Abweichungsfunktion ($f(S_N,\{S_M\})$) über einem vorgegebenen dritten Schwellwert (Thd) liegt.

2. Sensoranordnung (1) nach Anspruch 1, **dadurch gekennzeichnet, dass** das mindestens eine erste Vergleichssignal dem mindestens einen ersten Sensorsignal ($S_N$) und/oder mindestens einem verarbeiteten ersten Sensorsignal ($g(S_N)$) entspricht, und das mindestens eine zweite Vergleichssignal dem mindestens einen zweiten Sensorsignal ($S_M$) und/oder mindestens einem verarbeiteten zweite Sensorsignal ($h_M(S_M)$) entspricht.

3. Sensoranordnung (1) nach Anspruch 2, **dadurch gekennzeichnet, dass** die Auswerte- und Steuereinheit ($\mu$C) jeweils eine Absolutbetragsfunktion der Sensorsignale ($S_N$, $S_M$) berechnet, wobei die Auswerte- und Steuereinheit ($\mu$C) zur Verarbeitung der Sensorsignale ($S_N$, $S_M$) oder der berechneten Absolutbetragsfunktionen eine Filterung und/oder Fensterintegralbildung und/oder eine Integralbildung durchführt.

4. Sensoranordnung (1) nach Anspruch 3, **dadurch gekennzeichnet, dass** die Auswerte- und Steuereinheit ($\mu$C) die Integralbildung startet, wenn das korrespondierende Signal eine Startschwelle (Thd_start) überschreitet, wobei die Auswerte- und Steuereinheit ($\mu$C) die Integralbildung beendet und den Integralwert zurücksetzt, wenn das korrespondierende Signal eine Rücksetzschwelle (Thd_reset) unterschreitet.

5. Sensoranordnung (1) nach einem der Ansprüche 1 bis 4, **dadurch gekennzeichnet, dass** der erste Schwellwert (Thd_det) einen Signalwert repräsentiert, welcher signifikant oberhalb von Signalwerten für eine normale Fahrsituation liegt, wobei der zweite Schwellwert (Thd_drive) einen Bereich von Signalwerten für eine normale Fahrsituation nach oben begrenzt.

6. Sensoranordnung (1) nach einem der Ansprüche 1 bis 5, **dadurch gekennzeichnet, dass** der erste Sensor (N) und der mindestens eine zweite Sensor (M) die gleiche physikalische Größe erfassen.

7. Sensoranordnung (1) nach einem der Ansprüche 1 bis 5, **dadurch gekennzeichnet, dass** der erste Sensor (N) und der mindestens eine zweite Sensor (M) verschiedene physikalischen Größen erfassen.

8. Sensoranordnung (1) nach einem der Ansprüchen 1 bis 7, **dadurch gekennzeichnet, dass** der erste Sensor (N) und der mindestens eine zweite Sensor (M) die gleiche Erfassungsrichtung oder verschiedene Erfassungsrichtungen aufweisen.

9. Sensoranordnung (1) nach einem der Ansprüchen 1 bis 8, **dadurch gekennzeichnet, dass** der erste Sensor (N) und der mindestens eine zweite Sensor (M) am gleichen Einbauort oder an verschiedenen Einbauorten angeordnet sind.

**10.** Sensoranordnung (1) nach einem der Ansprüchen 1 bis 9, **dadurch gekennzeichnet, dass** die Auswerte- und Steuereinheit ($\mu$C) einen als defekt erkannten ersten Sensor (N) deaktiviert.

**11.** Verfahren zur Überwachung eines Sensors (N), welcher mindestens eine crashrelevante physikalische Größe erfasst und mindestens ein korrespondierendes erstes Sensorsignal ($S_N$) ausgibt, wobei das mindestens eine erste Sensorsignal ($S_N$) zur Crasherkennung ausgewertet wird, wobei mindestens ein zur Crasherkennung erfasstes zweites Sensorsignal ($S_M$) mindestens eines unabhängigen weiteren Sensors (M) ausgewertet wird, um einen Defekt des Sensors (N) zu erkennen, wobei ein Defekt des Sensors (N) erkannt wird, wenn mindestens ein erstes Vergleichssignal, welches auf dem mindestens einen ersten Sensorsignal ($S_N$) basiert, einen hohen Signalwert aufweist, welcher oberhalb eines vorgegebenen ersten Schwellwerts (Thd_det) liegt, und mindestens ein zur Überwachung des Sensors (N) herangezogenes zweites Vergleichssignal, welches auf dem mindestens einen zweiten Sensorsignal ($S_M$) des weiteren Sensors (M) basiert, gleichzeitig einen niedrigen Signalwert aufweist, welcher unterhalb eines vorgegebenen zweiten Schwellwerts (Thd_drive) liegt, und/oder eine aus dem ersten Vergleichssignal und dem zweiten Vergleichssignal erzeugte Abweichungsfunktion ($f(S_N,\{S_M\})$) über einem vorgegebenen dritten Schwellwert (Thd) liegt.

**12.** Verfahren nach Anspruch 11, **dadurch gekennzeichnet, dass** das mindestens eine erste Vergleichssignal dem mindestens einen ersten Sensorsignal ($S_N$) und/oder mindestens einem verarbeiteten ersten Sensorsignal ($g(S_N)$) entspricht, und das mindestens eine zweite Vergleichssignal dem mindestens einen zweiten Sensorsignal ($S_M$) und/oder mindestens einem verarbeiteten zweite Sensorsignal ($h_M(S_M)$) entspricht.

**13.** Verfahren nach Anspruch 11 oder 12, **dadurch gekennzeichnet, dass** das erste Sensorsignal ($S_N$) und/oder das verarbeitete erste Sensorsignal ($g(S_N)$) zur Defekterkennung für eine vorgegebene Mindestzeitspanne ($T_{min}$) über dem ersten Schwellwert (Thd_det) liegen, während das zweite Sensorsignal ($S_M$) und/oder das verarbeitete zweite Sensorsignal ($h_M(S_M)$) für einen vorgegebenen Zeitbereich, welcher die Mindestzeitspanne ($T_{min}$) für das erste Sensorsignal ($S_N$) und/oder das verarbeitete erste Sensorsignal ($g(S_N)$) überlappt, unterhalb des zweiten Schwellwerts (Thd_det) liegen.

**14.** Verfahren nach einem der Ansprüche 11 bis 13, **dadurch gekennzeichnet, dass** der erste Schwellwert (Thd_det) einen Signalwert repräsentiert, welcher signifikant oberhalb von Signalwerten für eine normale Fahrsituation liegt, wobei der zweite Schwellwert (Thd_drive) einen Bereich von Signalwerten für eine normale Fahrsituation nach oben begrenzt.

**15.** Verfahren nach einem der Ansprüche 11 bis 14, **dadurch gekennzeichnet, dass** der erste Sensor (N) und der mindestens eine zweite Sensor (M) die gleiche physikalische Größe erfassen und die gleiche Erfassungsrichtung aufweisen.

**16.** Verfahren nach einem der Ansprüchen 11 bis 15, **dadurch gekennzeichnet, dass** ein als defekt erkannter erster Sensor (N) deaktiviert wird.

## Claims

**1.** Sensor arrangement (1) for a vehicle, having a first sensor (N) that acquires at least one crash-relevant physical variable and outputs at least one corresponding first sensor signal ($S_N$), and having at least one second sensor (M) that acquires at least one crash-relevant physical variable independently of the first sensor (N) and outputs at least one corresponding second sensor signal ($S_M$), and having an evaluation and control unit ($\mu$C) that receives the at least one first sensor signal ($S_N$) and the at least one second sensor signal ($S_M$) and evaluates them for crash identification purposes, **characterized in that** the evaluation and control unit ($\mu$C) uses at least one second comparison signal based on the at least one second sensor signal ($S_M$) from the at least one second sensor (M) in order to monitor the first sensor (N), wherein the evaluation and control unit ($\mu$C) identifies that the first sensor (N) is defective when at least one first comparison signal based on the at least one first sensor signal ($S_N$) has a high signal value that lies above a predefined first threshold value (Thd_det) and the at least one second comparison signal, used to monitor the first sensor (N), from the second sensor (M) at the same time has a low signal value that lies below a predefined second threshold value (Thd_drive), and/or a deviation function ($f(S_N, \{S_M\})$) generated from the first comparison signal and the second comparison signal lies above a predefined third threshold value (Thd).

2. Sensor arrangement (1) according to Claim 1, **characterized in that** the at least one first comparison signal corresponds to the at least one first sensor signal ($S_N$) and/or to at least one processed first sensor signal ($g(S_N)$), and the at least one second comparison signal corresponds to the at least one second sensor signal ($S_M$) and/or to at least one processed second sensor signal ($h_M$ ($S_M$)).

3. Sensor arrangement (1) according to Claim 2, **characterized in that** the evaluation and control unit ($\mu$C) in each case calculates an absolute value function of the sensor signals ($S_N$, $S_M$), wherein the evaluation and control unit ($\mu$C) performs filtering and/or window integral formation and/or integral formation in order to process the sensor signals ($S_N$, $S_M$) or the calculated absolute value functions.

4. Sensor arrangement (1) according to Claim 3, **characterized in that** the evaluation and control unit ($\mu$C) starts the integral formation when the corresponding signal exceeds a starting threshold (Thd_start), wherein the evaluation and control unit ($\mu$C) ends the integral formation and resets the integral value when the corresponding signal falls below a reset threshold (Thd_reset).

5. Sensor arrangement (1) according to one of Claims 1 to 4, **characterized in that** the first threshold value (Thd_det) represents a signal value that lies significantly above signal values for a normal driving situation, wherein the second threshold value (Thd_drive) upwardly delimits a range of signal values for a normal driving situation.

6. Sensor arrangement (1) according to one of Claims 1 to 5, **characterized in that** the first sensor (N) and the at least one second sensor (M) acquire the same physical variable.

7. Sensor arrangement (1) according to one of Claims 1 to 5, **characterized in that** the first sensor (N) and the at least one second sensor (M) acquire different physical variables.

8. Sensor arrangement (1) according to one of Claims 1 to 7, **characterized in that** the first sensor (N) and the at least one second sensor (M) have the same acquisition direction or different acquisition directions.

9. Sensor arrangement (1) according to one of Claims 1 to 8, **characterized in that** the first sensor (N) and the at least one second sensor (M) are arranged at the same installation location or at different installation locations.

10. Sensor arrangement (1) according to one of Claims 1 to 9, **characterized in that** the evaluation and control unit ($\mu$C) deactivates a first sensor (N) identified as defective.

11. Method for monitoring a sensor (N) that acquires at least one crash-relevant physical variable and outputs at least one corresponding first sensor signal ($S_N$), wherein the at least one first sensor signal ($S_N$) is evaluated for crash identification purposes, wherein at least one second sensor signal ($S_M$), acquired for crash identification purposes, from at least one independent further sensor (M) is evaluated in order to identify a defect with the sensor (N), wherein a defect with the sensor (N) is identified when at least one first comparison signal based on the at least one first sensor signal ($S_N$) has a high signal value that lies above a predefined first threshold value (Thd_det) and at least one second comparison signal, used to monitor the sensor (N), based on the at least one second sensor signal ($S_M$) from the further sensor (M) at the same time has a low signal value that lies below a predefined second threshold value (Thd_drive), and/or a deviation function ($f(S_N,\{S_M\})$) generated from the first comparison signal and the second comparison signal lies above a predefined third threshold value (Thd).

12. Method according to Claim 11, **characterized in that** the at least one first comparison signal corresponds to the at least one first sensor signal ($S_N$) and/or to at least one processed first sensor signal ($g(S_N)$), and the at least one second comparison signal corresponds to the at least one second sensor signal ($S_M$) and/or to at least one processed second sensor signal ($h_M(S_M)$).

13. Method according to Claim 11 or 12, **characterized in that** the first sensor signal ($S_N$) and/or the processed first sensor signal ($g(S_N)$) lie above the first threshold value (Thd det) for a predefined minimum time interval ($T_{min}$) for defect identification purposes, while the second sensor signal ($S_M$) and/or the processed second sensor signal ($h_M(S_M)$) lie below the second threshold value (Thd_det) for a predefined time range that overlaps the minimum time interval ($T_{min}$) for the first sensor signal ($S_N$) and/or the processed first sensor signal ($g(S_N)$).

14. Method according to one of Claims 11 to 13, **characterized in that** the first threshold value (Thd_det) represents a signal value that lies significantly above signal values for a normal driving situation, wherein the second threshold value (Thd_drive) upwardly delimits a range of signal values for a normal driving situation.

**15.** Method according to one of Claims 11 to 14, **characterized in that** the first sensor (N) and the at least one second sensor (M) acquire the same physical variable and have the same acquisition direction.

**16.** Method according to one of Claims 11 to 15, **characterized in that** a first sensor (N) identified as defective is deactivated.

## Revendications

**1.** Agencement de capteurs (1) pour un véhicule, comprenant un premier capteur (N) qui détecte au moins une grandeur physique pertinente en cas de collision et délivre au moins un premier signal de capteur correspondant ($S_N$), et au moins un deuxième capteur (M) qui détecte indépendamment du premier capteur (N) au moins une grandeur physique pertinente en cas de collision et délivre au moins un deuxième signal de capteur correspondant ($S_M$), et une unité d'évaluation et de commande ($\mu$C) qui reçoit ledit au moins un premier signal de capteur ($S_N$) et ledit au moins un deuxième signal de capteur ($S_M$) et l'évalue pour une reconnaissance de collision,
**caractérisé en ce que** l'unité d'évaluation et de commande ($\mu$C) utilise au moins un deuxième signal de comparaison qui est basé sur ledit au moins un deuxième signal de capteur ($S_M$) du au moins un deuxième capteur (M) pour surveiller le premier capteur (N), l'unité d'évaluation et de commande ($\mu$C) reconnaissant que le premier capteur (N) est défectueux si au moins un premier signal de comparaison qui est basé sur ledit au moins un premier signal de capteur ($S_N$) présente une valeur de signal élevée qui est située au-dessus d'une première valeur seuil prédéfinie (Thd_det), et ledit au moins un deuxième signal de comparaison du deuxième capteur (M) utilisé pour la surveillance du premier capteur (N) présente en même temps une valeur de signal faible qui est située au-dessous d'une deuxième valeur seuil prédéfinie (Thd_drive), et/ou une fonction d'écart ($f(S_N, \{S_M\})$) produite à partir du premier signal de comparaison et du deuxième signal de comparaison se situe au-dessus d'une troisième valeur seuil prédéfinie (Thd) .

**2.** Agencement de capteurs (1) selon la revendication 1, **caractérisé en ce que** ledit au moins un premier signal de comparaison correspond audit au moins un premier signal de capteur ($S_N$) et/ou à au moins un premier signal de capteur traité ($g(S_N)$), et ledit au moins un deuxième signal de comparaison correspond audit au moins un deuxième signal de capteur ($S_M$) et/ou à au moins un deuxième signal de capteur traité ($h_M(S_M)$).

**3.** Agencement de capteurs (1) selon la revendication 2, **caractérisé en ce que** l'unité d'évaluation et de commande ($\mu$C) calcule respectivement une fonction de valeur absolue des signaux de capteur ($S_N$, $S_M$), l'unité d'évaluation et de commande ($\mu$C) effectuant pour le traitement des signaux de capteur ($S_N$, $S_M$) ou des fonctions de valeur absolue calculées un filtrage et/ou une formation d'intégrale de fenêtre et/ou une formation d'intégrale.

**4.** Agencement de capteurs (1) selon la revendication 3, **caractérisé en ce que** l'unité d'évaluation et de commande ($\mu$C) démarre la formation d'intégrale lorsque le signal correspondant dépasse un seuil de démarrage (Thd_start), l'unité d'évaluation et de commande ($\mu$C) terminant la formation d'intégrale et réinitialisant la valeur d'intégrale lorsque le signal correspondant soupasse un seuil de réinitialisation (Thd_reset).

**5.** Agencement de capteurs (1) selon l'une quelconque des revendications 1 à 4, **caractérisé en ce que** la première valeur seuil (Thd_det) représente une valeur de signal qui est située nettement au-dessus de valeurs de signal pour une situation de conduite normale, la deuxième valeur seuil (Thd_drive) délimitant vers le haut une plage de valeurs de signal pour une situation de conduite normale.

**6.** Agencement de capteurs (1) selon l'une quelconque des revendications 1 à 5, **caractérisé en ce que** le premier capteur (N) et ledit au moins un deuxième capteur (M) détectent la même grandeur physique.

**7.** Agencement de capteurs (1) selon l'une quelconque des revendications 1 à 5, **caractérisé en ce que** le premier capteur (N) et ledit au moins un deuxième capteur (M) détectent différentes grandeurs physiques.

**8.** Agencement de capteurs (1) selon l'une quelconque des revendications 1 à 7, **caractérisé en ce que** le premier capteur (N) et ledit au moins un deuxième capteur (M) présentent la même direction de détection ou des directions de détection différentes.

**9.** Agencement de capteurs (1) selon l'une quelconque des revendications 1 à 8, **caractérisé en ce que** le premier capteur (N) et ledit au moins un deuxième capteur (M) sont disposés au même site d'installation ou à différents sites d'installation.

**10.** Agencement de capteurs (1) selon l'une quelconque des revendications 1 à 9, **caractérisé en ce que** l'unité d'évaluation et de commande ($\mu C$) désactive un premier capteur (N) reconnu comme défectueux.

**11.** Procédé de surveillance d'un capteur (N) qui détecte au moins une grandeur physique pertinente en cas de collision et délivre au moins un premier signal de capteur ($S_N$) correspondant, ledit au moins un premier signal de capteur ($S_N$) étant évalué pour la reconnaissance de collision, au moins un deuxième signal de capteur ($S_M$) détecté pour la reconnaissance de collision d'au moins un autre capteur indépendant (M) étant évalué pour reconnaître un défaut du capteur (N), un défaut du capteur (N) étant reconnu quand au moins un premier signal de comparaison qui est basé sur ledit au moins un premier signal de capteur ($S_N$) présente une valeur de signal élevée qui est située au-dessus d'une première valeur seuil prédéfinie (Thd_det), et au moins un deuxième signal de comparaison utilisé pour surveiller le capteur (N) et qui est basé sur ledit au moins un deuxième signal de capteur ($S_M$) de l'autre capteur (M) présente en même temps une valeur de signal faible qui est située au-dessous d'une deuxième valeur de seuil prédéfinie (Thd_drive), et/ou une fonction d'écart ($f(S_N, \{S_M\})$) produite à partir du premier signal de comparaison et du deuxième signal de comparaison se situe au-dessus d'une troisième valeur seuil prédéfinie (Thd) .

**12.** Procédé selon la revendication 11, **caractérisé en ce que** ledit au moins un premier signal de comparaison correspond audit au moins un premier signal de capteur ($S_N$) et/ou à au moins un premier capteur signal traité ($g(S_N)$), et ledit au moins un deuxième signal de comparaison correspond audit au moins un deuxième signal de capteur ($S_M$) et/ou à au moins un deuxième signal de capteur traité ($h_M(S_M)$).

**13.** Procédé selon la revendication 11 ou 12, **caractérisé en ce que** le premier signal de capteur ($S_N$) et/ou le premier signal de capteur traité ($g(S_N)$) pour la reconnaissance de défaut se situent pour une période minimale prédéfinie ($T_{min}$) au-dessus de la première valeur seuil (Thd_det) alors que le deuxième signal de capteur ($S_M$) et/ou le deuxième signal de capteur traité ($h_M$ ($S_M$)) se situent au-dessous de la deuxième valeur seuil (Thd_det) pour une plage de temps prédéfinie qui recouvre la période minimale ($T_{min}$) pour le premier signal de capteur ($S_N$) et/ou le premier signal de capteur traité ($g(S_N)$).

**14.** Procédé selon l'une quelconque des revendications 11 à 13, **caractérisé en ce que** la première valeur seuil (Thd_det) représente une valeur de signal qui se situe nettement au-dessus des valeurs de signal pour une situation de conduite normale, la deuxième valeur seuil (Thd -drive) délimitant vers le haut une plage de valeurs de signal pour une situation de conduite normale.

**15.** Procédé selon l'une quelconque des revendications 11 à 14, **caractérisé en ce que** le premier capteur (N) et ledit au moins un deuxième capteur (M) détectent la même grandeur physique et présentent la même direction de détection.

**16.** Procédé selon l'une quelconque des revendications 11 à 15, **caractérisé en ce qu'**un premier capteur (N) reconnu comme défectueux est désactivé.

Fig. 1

1
M
N
M1
Mk
$S_N$
$\{S_M\}$
μC